(19) Europäisches Patentamt
European Patent Office
Office européen des brevets

(11) **EP 3 716 162 A1**

(12) **EUROPEAN PATENT APPLICATION**

(43) Date of publication:
**30.09.2020 Bulletin 2020/40**

(51) Int Cl.:
**G06Q 10/00** *(2012.01)*

(21) Application number: **19166274.1**

(22) Date of filing: **29.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Syed, Arslan Ali**
  **80937 München (DE)**
• **Gaponova, Irina**
  **80805 München (DE)**

(54) **NEURAL-NETWORK-BASED DYNAMIC MATCHING**

(57) A method for dynamic matching in a problem instance to be solved. The method comprises selecting a set of problem instances and a set of parameter values; selecting a metaheuristic algorithm; determining, for each problem instance in the set of problem instances and for each combination of parameter values of the set of parameter values, an average objective cost of a returned solution for each pair of problem instance and parameter values, based on the metaheuristic algorithm; determining a machine-learning-based function configured to estimate, for each problem instance in the set of problem instances and for each combination of parameter values in the set of parameter values, an average estimated cost of a returned solution for each pair; determining a set of features from the problem instance for the machine-learning-based function; determining a set of predicted parameter values based on a minimal estimated cost; and performing the dynamic matching based on the set of predicted parameter values and the metaheuristic.

600

| |
|---|
| Start | 601 |

↓

| Selecting a set of problem instances and a set of parameter values | 602 |

↓

| Selecting a metaheuristic algorithm | 604 |

↓

| Determining, for each problem instance in the set of problem instances and for each combination of parameter values of the set of parameter values, an average objective cost of a returned solution for each pair of problem instance and parameter values based on the metaheuristic algorithm | 606 |

↓

| Determining a machine-learning-based function configured to estimate, for each problem instance in the set of problem instances and for each combination of parameter values of the set of parameter values, an average estimated cost of a returned solution for each pair | 608 |

↓

| Determining a set of features from the problem instance for machine-learning-based function | 610 |

↓

| Determining a set of predicted parameter values based on a minimal estimated cost | 612 |

↓

| Performing the dynamic matching based on the set of predicted parameter values and the metaheuristic | 614 |

↓

| End | 616 |

Fig. 6

## Description

## Technical Field

The present disclosure relates to systems and methods for dynamic matching. In particular, the present disclosure relates to systems and methods for neural-network-based dynamic matching of users to vehicles in ride-hailing applications.

## Background Art

As an important part of on demand mobility (ODM), user centric urban ride hailing (RH) services (e.g. Uber, Lyft, Careem, DiDi) are becoming more and more common with the growing need for efficient transportation systems in big cities. Such services provide reliable means of transportation, often facilitate reduced travel times, and help to address issues with pollution and congestion.

In the field of ODM, in particular optimization of ODM, mainly the impact of RH services on overall traffic has been researched, while the particular problem of matching users to vehicles has not been a primary focus. Another line of research utilizes real data for simulating only the ODM vehicles.

Alonso-Mora, J., S. Samaranayake, A. Wallar, E. Frazzoli, and D. Rus, On-demand high capacity ride-sharing via dynamic trip-vehicle assignment (Proceedings of the National Academy of Sciences, Vol. 114, No. 3, 2017, pp. 462-467), describe the use of open-source New York City (NYC) taxi data for simulating a dynamic ride sharing service in the region of Manhattan. The document describes an online ride sharing algorithm which has been developed for vehicle matching and which showed a reduction in user delays by using a fleet of various size capacities.

In similar work, Vazifeh, M., P. Santi, G. Resta, S. Strogatz, and C. Ratti, Addressing the minimum fleet problem in on-demand urban mobility, (Nature, Vol. 557, No. 7706, 2018, p. 534), describe a fleet minimization problem on the same data and present a near-optimal online vehicle dispatching algorithm. It was shown, that a 33 percent reduction in the fleet size for the same NYC taxi data could be achieved.

The main scope of the work mentioned above does not include an interaction or impact of ODM services on overall traffic. The availability of actual representative data is extremely important for simulations. For example, the NYC taxi data is generally acquired by real taxis, that are typically hailed instead of being booked via an app. Further, due to the high number of taxis, they are typically immediately available, and that might not reflect real RH scenarios. Therefore, it is more appropriate to use booking data collected via some form of ODM app.

Regardless of the simulation or the actual operation of an RH service, a very important question is how to match vehicles to users, such that various usage parameters can be optimized (e.g. average waiting time, average distance between drop-off and subsequent pick-up). In known optimization techniques, this matching problem is referred to in connection with "Vehicle Routing Problem with Time Windows" (VRPTW) or, more precisely, multi-vehicle "Dial a Ride Problem" (DARP; see Toth, P. and D. Vigo, Vehicle routing: problems, methods, and applications. SIAM, 2014). For RH, DARP can be thought of having multiple starting stations, each corresponding to the current position of the individual vehicle.

Ho, S. C.,W. Szeto, Y.-H. Kuo, J. M. Leung, M. Petering, and T.W. Tou, A survey of dial a-ride problems: Literature review and recent developments (Transportation Research Part B: Methodological, 2018), describe a recent survey which shows a resurgence of interest into DARP. Since the exact methods are able to solve only small size problem, major focus has been put on various metaheuristics for DARP, for example "Adaptive Large Neighborhood Search" (ALNS; see Ropke, S. and D. Pisinger, An adaptive large neighborhood search heuristic for the pickup and delivery problem with time windows (Transportation science, Vol. 40, No. 4, 2006, pp. 455-472) or Gschwind, T.,M. Drexl, et al., Adaptive Large Neighborhood Search with a Constant-Time Feasibility Test for the Dial-a-Ride Problem, 2016), "Tabu Search" (TS; see Detti, P., F. Papalini, and G. Z. M. de Lara, A multi-depot dial-a-ride problem with heterogeneous vehicles and compatibility constraints in healthcare. Omega, Vol. 70, 2017, pp. 1-14), and "Variable Neighborhood Search" (VRP; see Parragh, S. N., K. F. Doerner, and R. F. Hartl, Variable neighborhood search for the dial-a-ride problem. Computers & Operations Research, Vol. 37, No. 6, 2010, pp. 1129-1138).

While the above-mentioned static DARP approaches are interesting with respect to the matching problem in RH, the difficulty of the problem increases manifold by the dynamic arrival of requests. For such scenarios, a known practice is to apply the methods already developed for static problems on a *rolling-horizon-basis.*

Toth, P. and D. Vigo, Vehicle routing: problems, methods, and applications (SIAM, 2014), describe a rolling-horizon approach in which the requests are accumulated for a fixed period of time and then the problem is reoptimized.

Further, Agatz, N., A. Erera, M. Savelsbergh, and X. Wang, Optimization for dynamic ride-sharing: A review (European Journal of Operational Research, Vol. 223, No. 2, 2012, pp. 295-303), describe multiple re-optimization periods for dynamic ride sharing problems in the city of Atlanta. Hong, L., An improved LNS algorithm for real-time vehicle routing problem with time windows (Computers & Operations Research, Vol. 39, No. 2, 2012, pp. 151-163) used the same strategy accompanied with Large Neighborhood Search (LNS).

Using metaheuristics in a commonly known manner for addressing dynamic problems, an important issue lies with tuning the metaheuristics parameters. In case of static problems, a large number of experiments on similar problems of smaller sizes typically have to be conducted. Subsequently, the parameter values that perform best, on average, can be selected for solving larger-sized problems. However, in a dynamic environment, the nature of the problem keeps changing continually, thereby making it difficult to find a general set of parameter values that perform well for all subproblems.

As far as the matching problem in RH is concerned, it is well known that the pattern of incoming requests is time dependent (e.g. depending on time of day and day of week).

Therefore, there is a need for systems and methods that allow for an accurate prediction of parameters.

Further, there is a need for systems and methods that enable a prediction of an optimized parameter value set for a given problem, instead of using a constant set of parameters.

Embodiments in accordance with the present disclosure include the use of machine learning techniques for predicting an optimized parameter value set for a given problem, instead of using a constant set of parameters. One of the key challenges is selecting the correct features for predicting the parameters accurately. Embodiments in accordance with the present disclosure is based on the use of a modified version of pairwise Shareability Graph for feature extraction (see, e.g. Santi, P., G. Resta, M. Szell, S. Sobolevsky, S. H. Strogatz, and C. Ratti, Quantifying the benefits of vehicle pooling with shareability networks (Proceedings of the National Academy of Sciences, Vol. 111, No. 37, 2014, pp. 13290-13294).

In order to show effectiveness of the embodiments in accordance with the present disclosure, proprietary data from the presently available car sharing service DriveNow, operated by the BMW Group, is used. For the metaheuristic, a modified version of the ALNS algorithm can be employed.

Embodiments in accordance with the present disclosure employ a single insertion and removal operator, in line with a focus more on parameterization and performance prediction. But the approach is general and can be easily applied to any metaheuristic algorithm.

## Summary of Invention

One or more of the objects specified above are substantially achieved by methods, and systems in accordance with any one of the appended claims, which alleviate or eliminate one or more of the described disadvantages and which realize one or more of the described advantages.

In a first aspect according to the invention, there is provided a method for dynamic matching in a problem instance to be solved. The method comprises selecting a set of problem instances and a set of parameter values; selecting a metaheuristic algorithm; determining, for each problem instance in the set of problem instances and for each combination of parameter values of the set of parameter values, an average objective cost of a returned solution for each pair of problem instance and parameter values, based on the metaheuristic algorithm; determining a machine-learning-based function configured to estimate, for each problem instance in the set of problem instances and for each combination of parameter values of the set of parameter values, an average estimated cost of a returned solution for each pair; determining a set of features from the problem instance for the machine-learning-based function; determining a set of predicted parameter values based on a minimal estimated cost; and performing the dynamic matching based on the set of predicted parameter values and the metaheuristic.

In a second aspect according to aspect 1, determining the average objective cost of the returned solution for each pair includes running the metaheuristic algorithm multiple times for each combination of parameter values of the set of parameter values.

In a third aspect according to any one of aspects 1 or 2, determining the machine-learning-based function includes extracting problem specific features from the respective problem instance; extracting parameter specific features from the respective parameter values; and providing the problem specific features and the parameter specific features to the machine-learning-based function, preferably in form of a feature vector.

In a fourth aspect according to any one of aspects 1 to 3, the machine-learning-based function includes a Neural Network, including, but not limited to, one or more of: Feed Forward Neural Networks, Recurrent Neural Networks, Long Short Term Memory Networks, and Pointer Networks.

In a fifth aspect according to any one of aspects 1 to 4, determining the machine-learning-based function includes determining an error between a respective average estimated cost and a respective average objective cost of a returned solution for each pair; and minimizing the error.

In a sixth aspect according to any one of aspects 1 to 5, determining the machine-learning-based function includes processing the respective average objective cost based on a function G(.) in order to obtain respective processed average objective costs; and providing the respective processed average objective costs to the machine-learning-based function.

In a seventh aspect according to any one of aspects 1 to 6, for each problem instance of the set of problem instances, there exists a set of feasible solutions and an associated objective cost given by an objective cost function.

In an eighth aspect according to any one of aspects 1 to 7, the metaheuristic algorithm is configured to return a feasible solution based on a respective problem instance and metaheuristic parameters values, optionally wherein the metaheuristic algorithm is configured to return the feasible solution when executed once.

In a ninth aspect according to aspect 3, extracting the problem specific features) from the respective problem instance includes generating a pair-wise shareability graph; and performing a large neighborhood search on the pair-wise shareability graph in order to extract the problem specific features.

In a thenth aspect according to any one of aspects 4 or 9, extracting the parameter specific features from the respective parameter values includes generating the parameter specific features based on the application of binning techniques to one or more percentage frequency distributions, optionally in the form of one or more percentage frequency distribution-based feature vectors.

**Brief Description of Drawings**

The accompanying drawings disclose exemplifying and non-limiting aspects in accordance with embodiments of the present invention. In the drawings, like reference numerals denote the same, similar, or identical components.

Figure 1 illustrates dynamic selection of metaheuristic parameter values using a proxy function in accordance with embodiments of the present disclosure;

Figure 2 illustrates an example showing the generation of a feature vector for a single problem instance and parameter values pair in accordance with embodiments of the present disclosure;

Figure 3 illustrates an example of the used shareability or RV graph in accordance with embodiments of the present disclosure;

Figure 4 illustrates an example showing the generation of feature vectors for the vehicle to passenger matching problem in accordance with embodiments of the present disclosure;

Figures 5 (a) and 5 (b) show comparisons of the prediction accuracy for three strategies in accordance with embodiments of the present invention; and

Figure 6 shows a flow chart of a method for dynamic matching in accordance with embodiments of the present invention.

**Detailed Description**

In the following detailed description, unless specifically stated otherwise, identical, same, or similarly functioning elements are denoted using identical reference numerals.

In order to characterize the vehicle to passenger matching problem, a fleet $V$ of size $m$ and a set $R$ of n requests is considered. In order to focus on the main objective of predicting the performance of a metaheuristic, it is assumed that each vehicle can serve only one request at a time (i.e. there is no ride sharing). For each request $r \in R$, there is a pickup location $r_p$, a drop-off location $r_d$ and the time $t_r$ when the request (i.e. pickup) should be fulfilled. The time it takes to travel from $r_p$ to $r_d$ is given as $T_r$. For each vehicle $v \in V$, let $P_v \subseteq R$ be a set of requests assigned to $v$ and $T_v$ be the total duration that $v$ will take to serve requests in $P_v$. It is assumed that after serving all requests in $P_v$ the vehicle stays at the drop-off location of the last request. Let $d_{max}$ be a constant indicating the maximum delay allowed for picking up a request. Then for each request $r$ the allowed pickup time window is given as, $[t_r, t_r + d_{max}]$. For each vehicle $v \in V$, let $A_{rv}$ be the vehicle arrival time at the pickup location of the request $r$. It is noted that it is allowed for the vehicle to arrive at the pickup location $r$ before the start of the time window of $r$, in which case v will have to wait until $t_r$. Therefore, the waiting time for $v$ and the delay for the user pickup can be calculated as $wait_{rv} = \max(0, t_r - A_{rv})$ and $delay_{rv} = \max(0, A_{rv} - t_r)$ respectively. Lastly, let $c_r$ be 0 if request $r$ is not covered by any vehicle otherwise 1. With the above notations, the multi-objective optimization problem is given as:

$$\min \alpha \sum_{v \in V} T_v + \beta \sum_{v \in V} \sum_{r \in P_v} delay_{rv} + \gamma \sum_{v \in V} \sum_{r \in P_v} wait_{rv} + \delta \sum_{r \in R} (1 - c_r) \qquad (1)$$

where α, β, and γ are constant weights defining the relative importance of the total travel time of all the vehicles, the total delay to the users and the total time the vehicles were waiting for the users respectively. It is also noteworthy that γ is relevant to the case when the drivers are users themselves, and it is desired to reduce their waiting time as well. If the drivers are employees of a company then they can wait indefinitely for the user, and γ can be set to zero. Finally, δ is heavy weight for giving preference to a matching maximum number of passengers.

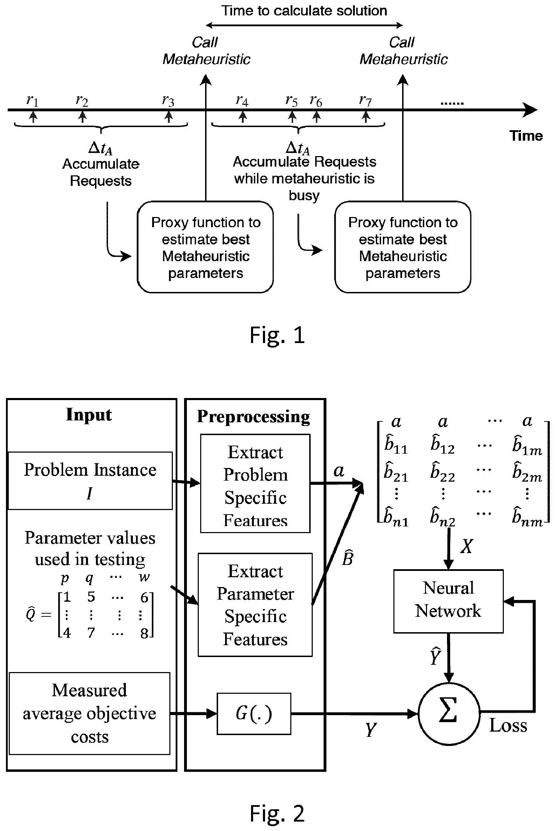

Figure 1 illustrates dynamic selection of metaheuristic parameter values using a proxy function in accordance with embodiments of the present disclosure.

In the rolling horizon strategy for dynamic matching, the new user requests are accumulated for a specific period of time before optimizing the already scheduled but hitherto unserved requests and the newly accumulated requests. Selecting the right value for this *accumulation period*, $\Delta t_A$, is of utmost importance for the real-time application of the RH service. Selecting a very low $\Delta t_A$ will lead to a myopic strategy with a low-quality solution, while selecting a very high value might lead to better solution at the expense of delayed response and big problem size.

If the metaheuristics are used for optimization, then the question is what parameter values would give the best performance. The size, and the temporal and spatial distribution of the requests can vary significantly in each call to the metaheuristic, thereby making it difficult to tune the metaheuristic parameters that give the best solution every time. Besides, since the metaheuristic can only be run for a limited time $\Delta t_A$, it is crucial to select parameter values that give the best solution quickly.

Therefore, in accordance with embodiments of the present disclosure a proxy function is used that can estimate the performance of the metaheuristic for given problem instance against various possible parameter values. Then, the values that are expected to give the best performance are selected, as shown in Figure 1. Such a proxy function can be estimated using various statistical tools. In accordance with embodiments of the present disclosure it is suggested to use Neural Networks (NN) for this prediction.

With respect to the neural network-based metaheuristic parameterization, the framework in accordance with embodiments of the present disclosure is based on the concept that the solution quality and the performance of a metaheuristic depends not only on the chosen parameter values, but also on the nature of the problem instance being solved. The metaheuristics always need to be tuned to give satisfactory performance on a specific group of problems (see Talbi, E.-G., Metaheuristics: from design to implementation, Vol. 74. John Wiley & Sons, 42 2009; see also Ropke et al. as cited above). It is assumed that a metaheuristic gives similar performance for a specific set of parameters when the problem instances have some common features. Generally, it is very difficult to find such features, and multiple experiments are typically conducted in order to discover them.

Figure 2 illustrates an example showing the generation of a feature vector for a single problem instance and parameter values pair in accordance with embodiments of the present disclosure.

Modern machine learning techniques have shown promising results for multiple problems. It is proposed to use NN to learn various features and problem characteristics to predict the performance of the metaheuristic. This is especially beneficial for the problems where some patterns already exist. These NN show the capability to learn complex relations between the problem instances and the metaheuristic performance. For example, the pattern of new requests in RH services are different during different time slots (e.g. in the morning and the evening time slots). Therefore, if NN are trained to predict the objective cost by examining the request frequency for the corresponding time, various complex relations can be learned and the performance can be accurately predicted. Thus, in order to benefit from NN in the above-described manner the framework is divided into three phases:

(i) **Test Phase:** Consider a discrete minimization problem $\mathscr{P}$ given by a set of problem instances $\mathscr{I}$. For each problem instance

$$I \in \mathscr{I},$$

there exist a set $\mathscr{F}_I$ of feasible solutions and an associated objective cost given by the function

$$f: \mathscr{F} \mapsto \mathbb{R}.$$

Also consider a metaheuristic algorithm

$$M: \mathscr{I} \times \mathscr{P} \mapsto \mathscr{F}$$

that takes a problem instance and metaheuristic parameter values, given by set $\mathscr{P}$, and returns a feasible solution with the least cost that it could find in one run. During the test phase, first a set

$$\bar{I} \subset \mathscr{I}$$

of test problems (herein also referred to as "problem instances") and a set

$$\wp \subset \mathscr{P}$$

of parameter values are picked. Then, for each problem $I \in \bar{I}$, the metaheuristic is run multiple times for each combination of parameters values $Q \in \wp$, and the average objective cost of the returned solutions for each $I$ and $Q$ pair is taken. This way, a regression problem is generated, where the measured average costs $\mathscr{C}$ act as the dependent variable, and a feature set derived from $\bar{I}$ and $\wp$ act as independent variables.

(ii) **Training Phase:** In the training phase the objective is to calculate an NN-based function $F: \bar{I} \times \wp \mapsto \hat{C}$ that takes a problem instance and parameter values, and determines the respective average estimated costs with the least error as possible as compared to the respective average objective costs. Before feeding the problem instance $I$ and parameter values $Q$ to NN, both are preprocessed for extracting the useful features for increasing NN's prediction. These two are respectively called the "Problem Specific Features" and the "Parameter Specific Features". The overall procedure for a single pair of $I$ and $Q$ is shown in Figure 2. The objective costs are also preprocessed using some function G(.). It is noted that this procedure is done for all the problem instances in $\bar{I}$.

Finding the right features is extremely critical for high degree of accuracy. They are also highly specific to the overall problem, for example, the same features used for VRPTW cannot be used for any general routing problem.

(iii) **Prediction Phase:** Just like the training phase for predicting the objective costs for an unseen problem $J$, the same features that were used during training phase are extracted from the problem. Then the features are combined with the set of all the unique parameter values $\wp$ that were used during testing. Finally, the parameter values that are predicted to give the least objective cost are selected for the metaheuristic. The "objective costs" are determined based on equation (1).

The details of the tested metaheuristic algorithm and the proposed problem specific features for the above-mentioned matching problem are as follows. First, the pair-wise shareability graph is described, which is also used for extracting useful features for training the NN

The pair-wise shareability or RV graph is based on the concepts described by Santi et al. (see above). Consider a directed graph $G(N,E)$ with set $N=V \cap R$ as nodes and edges $E$ defined as follows:

For a vehicle $v \in V$ and a request $r \in R$, the edge $(v,r) \in E$, with a weight $e=T_{vr}+t_s-t_r$, if starting from the current location the vehicle can pick up the request with a delay less than maximum allowed delay $d_{max}$, i.e. $T_{vr}+t_s-t_r<d_{max}$ where $T_{vr}$ is the traveling time from the vehicle location to the pickup point of $r$ and $t_s$ is the start time of the vehicle.

Similarly for two requests $r_1$ and $r_2$, the edge $(r_1,r_2) \in E$, with weight $e=T_{r1r2}+T_{r1}+t_{r1}-t_{r2}$, if an imaginary vehicle starting at the pickup point of $r_1$, drops off $r_1$ first and then goes and picks up $r_2$ such that the delay for picking up $r_2$ is less than $d_{max}$, i.e. $T_{r1r2}+T_{r1}+t_{r1}-t_{r2}<d_{max}$, where $T_{r1}$ is the travel time from pickup to drop-off location of $r_1$ and $T_{r1r2}$ is the distance from drop-off of $r_1$ to pickup of $r_2$. (And vice versa for edge $(r_2,r_1) \in E$).

Note that positive edge weight in $G$ means that the request pickup is delayed by the given weight, while a negative weight means that the vehicle arrived earlier and have to wait. The edge weights help in the implementation, as these weights could easily be accumulated for checking the feasibility of a vehicle route.

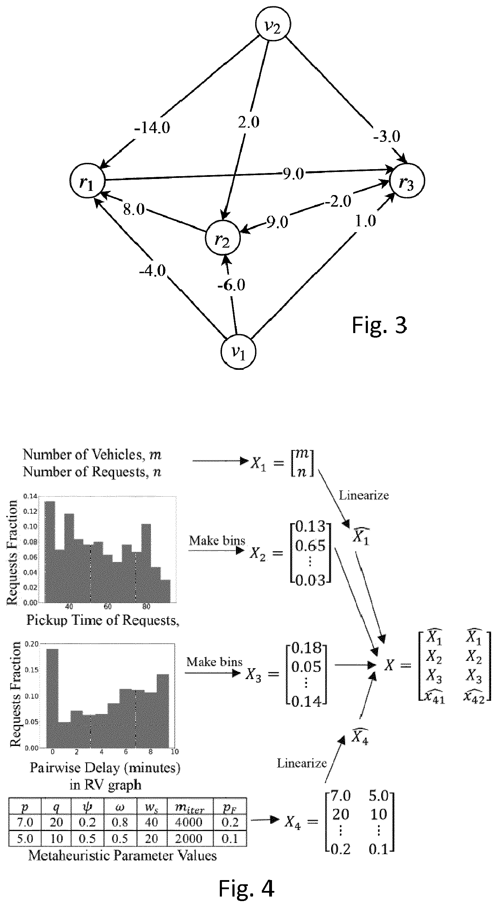

Figure 3 illustrates an example of the used shareability or RV graph in accordance with embodiments of the present disclosure, where Tri is the travel time from pickup to drop off of the request, tri the absolute time when customer wants to be picked up, and $d_{max}$ is the maximum delay allowed for picking up a request. The example is based on the following requests and travel time matrix:

| | $d_{max}$ = 10 min | |
|---|---|---|
| Requests | $t_{r_i}$ | $T_{r_i}$ |
| $r_1$ | 28 | 3 |
| $r_2$ | 29 | 1 |

(continued)

|  | $d_{max} = 10$ $min$ |  |
| --- | --- | --- |
| Requests | $t_{r_i}$ | $T_{r_i}$ |
| $r_3$ | 33 | 4 |

|  |  | Destination | | |
| --- | --- | --- | --- | --- |
|  |  | $r_1$ | $r_2$ | $r_3$ |
| Source | $v_1$ | 24 | 23 | 34 |
|  | $v_2$ | 14 | 31 | 30 |
|  | $r_1$ | 0 | 9 | 11 |
|  | $r_2$ | 6 | 0 | 1 |
|  | $r_3$ | 7 | 1 | 0 |

LNS tries to explore such a large neighborhood of the solution that cannot be explored explicitly. Practically this is achieved by partially destroying and rebuilding the solution, which in case of the matching problem would mean to remove and reinsert the requests following some specific rules. The number of requests removed in each iteration determines the size of the neighborhood being explored. Furthermore, in LNS the different methodologies used for removal and insertion of the customer requests have a big influence on the solution quality (see Ropke et al.).

For the current work a modified form of the LNS algorithm (see above) is used. In order to have a comparatively predictable performance for different metaheuristic parameters, using the adaptive scheme mentioned above is avoided. Secondly, only one set of insertion and removal operators is used, i.e. 2-regret insertion and shaw removal.

(i) **Shaw Removal Heuristic:** The original shaw removal heuristic is removed to suit the matching problem. The general concept is to remove similar requests. The more unique a request is, the higher the chances are that it cannot be shuffled with any other request, and thus can end up in the same place from where it was removed. This will lead to getting stuck in some local optimal point, and not able to find better solutions.

The similarity is measured using a relatedness measure $K(r_i, r_j)$, the lower it is the more similar the requests $r_i$ and $r_j$ are. The presented relatedness measure is based on two terms. The first term considers the difference in pickup time $t_r$ provided by the request, while the second term considers the difference in the number of possible feasible routes passing through the requests. The second term is measured using the degree of the request node in the RV graph, as it gives a rough estimate of the number of possible routes passing through the request. Thus, $K$ is calculated as:

$$K(r_i, r_j) = \psi \frac{|t_{r_i} - t_{r_j}|}{\min(t_{r_i}, t_{r_j})} + \omega \frac{|\deg(r_i) - \deg(r_j)|}{\min(\deg(r_i), \deg(r_j))} \qquad (2)$$

where deg(.) denotes the degree of the request node in the RV graph, and $\psi, \omega \in [0,1]$ are the weights for the two terms. The heuristic also uses a determinism parameter $p \geq 1$ for introducing randomness into the selection of the requests. The higher this parameter is, the lesser the degree of randomness.

(ii) **2-regret insertion:** The 2-regret insertion policy tries to allow the insertion of maximum requests by sort of looking into future. It inserts a request that will suffer or regret the most if not inserted in the current iteration. It looks at the difference in costs for inserting the request at its best and the second best locations, which it calls as the regret value. It calculates this value for all the unmatched requests and inserts the one with the highest regret at its best location. Just like in removal operator, it also uses the same parameter $p$ to introduce randomness into selection of requests.

(iii) **Acceptance and Stopping criteria:** In order to avoid getting stuck into local optima, simulated annealing is used as the acceptance criteria. A solution $\hat{s}$ is accepted with probability $e^{-\frac{f(\hat{s}-f(s))}{T}}$, where $T$ is the temperature, $s$ is the previous accepted solution and $f(.)$ is the objective function. LNS starts at an initial temperature $T_{start}$, and then decreases by a decay rate of $c \in (0,1)$ in each iteration. First the initial solution is calculated by 2-regret insertion, and then for making $T_{start}$ problem instance dependent, it is calculated such that a solution that is $w_s$ percent worse than the initial solution is accepted with 0.5 probability. Furthermore, for the calculation of $T_{start}$, a modified objective function is used for calculating the cost of the initial solution, that is obtained by setting $\delta=0$ in equation (1).

With the above notations, following is the summary of the six LNS parameters considered for parameterization:

1. $q$: The percentage of requests to be removed from the solution in each iteration.
2. $p$: The degree of randomness for removal and insertion operators.
3. $\psi$: The weight factor for the time term in shaw removal operator.
4. $\omega$: The weight factor for the RV graph term in shaw removal operator.
5. $w_s$: The percentage term for calculating the initial temperature, $T_{start}$
6. $c$: The Decay rate of the temperature for simulated annealing.

In line with embodiments of the present disclosure, a key concept is to provide a trained NN that gives a good prediction of the objective cost for problems of various sizes. For achieving this goal, NN needs detailed features that are specific to the individual problem instance. For training the NN it is of utmost importance to have just the right number of independent features that would characterize the important details of the problem. For example, if a NN is trained on some problem set that includes problems with various numbers of vehicles and requests, then just the amount of vehicles and the requests can be used to predict the objective cost up to certain accuracy. But such a trained NN only looks at these two parameters and cannot differentiate among cases that have same number of vehicles and the requests but vary in other aspects. Thus, it needs detailed features for producing a generalized trained NN that is able to tackle wide variety of problems.

For solving this issue, besides using the number of cars and the requests, a binning technique can be used on various percentage frequency distributions (PFD) for getting detailed feature vectors. In order to keep the bins consistent for all the training problems, the size and the number of bins are selected according to the biggest problem in the data set.

Figure 4 illustrates an example showing the generation of feature vectors for the vehicle to passenger matching problem in accordance with embodiments of the present disclosure. In particular, Figure 4 shows an example of generating feature vectors for a single problem instance using two PFD. As shown, the metaheuristic parameter values are linearized using all the individual parameter values used during the testing of LNS. Similarly, the number of vehicles and requests are linearized so that all the values lie between 0 and 1. The linearization is usually required for easier convergence of NN

Following is the list of variables which were used for creating PFD based feature vectors:

1. The pickup time $t_r$ given by requests
2. The duration of journey from pickup to drop-off location of individual request, $T_r$
3. Travelling time from the drop-off point of one request to the pickup point of another, $T_{(r1,r2)}$
4. Pairwise delay for pickup between nodes in the RV graph
5. Pairwise vehicle waiting time between nodes in the RV graph
6. The number of outward edges (outdegree) of each node in the RV graph

Contrary to the first three distributions, the last three also depend on the maximum delay allowed for picking up a request. Additionally, they also characterize the complexity of the problem, as the implemented LNS uses RV graph for exploring the feasible solutions.

Computational experiments are described below. First, a description of the problem data set is given. Subsequently, the training of NN and the results of the experiments are discussed.

Data from DriveNow, a free floating car sharing service of BMW is used. The booking data is regularly collected by DriveNow via a corresponding app. The data used includes data acquired in the city of Munich in April and May 2017, in order to generate customer requests. On average, there were more than 2500 bookings per day for the two months, with a fleet size of more than 700 vehicles, each with a capacity of maximum 5 persons (including the driver). As the whole vehicle is booked via the app for a specified period of time, the data does not include the number of passengers riding the vehicle. Therefore, the data does not directly represent customer requests for an RH service, rather it consists of the time and location when a customer booked the car, and when he left it. But since the vehicle booking also represents the customer demand for a ride in a region, this is assumed to represent customer requests in RH with sufficient accuracy. The booking time, booking location, and the final location from the DriveNow data is used to represent the request's

pickup time $t_r$, pickup location $r_p$ and drop-off location $r_d$ respectively.

It is observed from the data that the frequency of vehicle booking is different throughout the day. Generally, in the morning the booking frequency is much lower than evening, which will be referred to as "low frequency" (LF) and "high frequency" (HF) cases respectively. Furthermore, these bookings follow some pattern depending on the day of the week. For example, the distribution of bookings on Monday morning is very different from Thursday morning.

Table 1 shows problem instances from DriveNow data. For both LF and HF, 7 problems were taken for each number of requests. Three sets of vehicles (10, 20 and 30) were used with LF and three sets of vehicles (20, 35 and 50) were tested with HF. $\mu_{period}$ and $\sigma_{period}$ represent the mean and standard deviation of the time difference between the first and the last request in minutes respectively. $\mu_{travel}$ and $\sigma_{travel}$ represent the mean and standard deviation of the travel time (calculated through OSRM) from start to end location of the request in minutes.

Table 1

| | LF (9am) | | | | HF (6pm) | | | |
|---|---|---|---|---|---|---|---|---|
| **No. of requests** | $\mu_{period}$ | $\sigma_{period}$ | $\mu_{travel}$ | $\sigma_{travel}$ | $\mu_{period}$ | $\sigma_{period}$ | $\mu_{travel}$ | $\sigma_{travel}$ |
| 50 | 22.1 | 19.6 | 5.6 | 0.63 | 13.3 | 7.7 | 8.1 | 0.57 |
| 100 | 45.6 | 35.7 | 6.1 | 0.43 | 27.7 | 16.2 | 8.2 | 0.26 |
| 150 | 68.5 | 56.6 | 6.1 | 0.51 | 40.7 | 24.4 | 8.2 | 0.35 |
| 200 | 90 | 70 | 6.2 | 0.41 | 56.2 | 32.3 | 8.1 | 0.31 |
| 250 | 110.7 | 84.5 | 6.2 | 0.29 | 72.9 | 39.8 | 8.1 | 0.38 |
| 300 | 130.6 | 96 | 6.3 | 0.22 | 90.2 | 47.9 | 8.1 | 0.31 |
| Combinations with vehicles | $3 \times 7 \times 6 = 126$ | | | | $3 \times 7 \times 6 = 126$ | | | |
| Total Instances | 252 | | | | | | | |

Since it was previously assumed that the generation of new problem instances follow some pattern, a restriction to choosing problem instances from specific day and time of the week is set. Furthermore, for making the problems general at the same time, examples of both LF and HF are included. Various numbers of requests from 9am (LF) and 6pm (HF) on Saturdays are selected. Then, the subsequent requests from the same day of the consecutive weeks are selected. For each problem instance, random vehicles are generated throughout the city of Munich and the open source routing machine (OSRM) is used to calculate the travel time between different locations. As evident from Table 1, HF problems not only have almost 50 percent higher requests rate, but also exhibit longer trips compared to LF problems.

It should be noted that a problem with HF requests will have more edges in the RV graph, and thus more difficult to solve than a LF problem. Additionally, the vehicle minimization problem is not solved at the start of the optimization, as generally in RH services the number and locations of vehicles are already known at the time of solving the matching problem. Rather, the problem is run with different number of vehicles. Therefore, a combination of requests and vehicles is considered as a different problem instance, as shown in Table 1.

Further, the problem instances are divided into two sets: training and validation, and testing. This division is required for training the NN efficiently. Out of seven problems for each pair of frequency and requests in Table 1, one set of five problems is kept for training and validation, and another set of two problems for final testing.

As most of the considered metaheuristic parameters were continuous, the parameter values are first divided into discreet value ranges on which LNS was tested. Table 2 shows the value ranges used for testing:

Table 2

| | min | max | Step size | Total Steps |
|---|---|---|---|---|
| $(\psi, \omega)$ | (0.1, 0.9) | (0.9, 0.1) | (+0.1, -0.1) | 10 |
| $p$ | 1 | 31 | 3 | 11 |
| $q$ | 5 | 50 | 5 | 10 |
| $w_s$ | 20 | 50 | 10 | 4 |
| $p_F$ | 10 | 30 | 10 | 3 |
| $m_{iter}$ | 2000 | 20000 | 3000 | 7 |

The two parameters for the shaw removals, i.e. $\psi$ and $\omega$, were used in pair such that their sum was always one. Furthermore, for the objective function in equation (1), the following variables are set for the experiments: $\alpha = 0.3$, $\beta = 0.5$, $\gamma = 0.2$, and $\delta = 50$.

It was not possible to test all the possible combinations of the parameter values on all the problem instances, as the number of possible combinations was huge and it was not feasible for the current work. Rather, the same strategy is adopted as used by Ropke et al. for parameters tuning. Each problem instance is started with a good set of parameter values, which are selected based on intuition and basic experiments. This cannot be quantified but has to be determined in a different manner. In one embodiment, the initial parameters are selected based on the experience with other examples. In other embodiments, experiments are conducted on small sized problems and the performance with different parameter values is determined. Then, the parameter values are changed one at a time. For each value of the parameter, LNS is run four times and the average objective cost of the solutions is recorded. After going through all values of one parameter, its value is set to the best one found, and then continued the same process for the next parameter. For this procedure the same order as given in Table 2 is followed from top to bottom. Thus, in total, 45 different parameter value combinations are tested for each of the problems in Table 1. $m_{iter}$ is deliberately kept at the end so that, once all other parameters are tested, the LNS is tested for various number of iterations.

For training the NN, the problem instances from the training and validation group are used. Considering the total number of parameter values tested for each problem in the group, overall, $45 \times 3 \times 30 \times 2 = 8100$ feature vectors were available for training NN. The size of individual vector depended on the selected features and the details of the associated bins used. Since the amount of data available for the NN was limited, the K-Fold cross validation scheme was used for training, with K=8. This proved to be very beneficial for learning the generalities of the problem.

Aside from various PFD based features, the following were found to be also useful for further reducing the overall loss:

(i) Normalizing the objective costs by dividing it by associated number of requests.
(ii) Using crossed features by crossing every parameter with other parameters.
(iii) Including an extra element in the PFD based feature vectors for the total counts used for calculating percentage.

From the above three features, the last two were linearized using the values from all the instances before feeding to the NN. Table 3 shows the details of objective costs calculated during the test phase. Dividing the costs by the number of requests brought the distribution on similar scale for all the problems. This made the problem easier to learn by the NN

Table 3

| No. of Reqs | Objective Cost | | Normalized Objective Cost | |
| --- | --- | --- | --- | --- |
| | $\mu$ | $\sigma$ | $\mu$ | $\sigma$ |
| 50 | 401.4 | 226.4 | 8 | 4.5 |
| 100 | 1048.8 | 704.6 | 10.5 | 7.0 |
| 150 | 1840.6 | 1221.7 | 12.27 | 8.1 |
| 200 | 2720.5 | 1752.9 | 13.6 | 8.8 |
| 250 | 3423.3 | 2208.4 | 13.7 | 8.8 |
| 300 | 4247.4 | 2725.5 | 14.2 | 9.1 |

The experiments included simple feed-forward NN with various number of dense NN layers. For each hidden layer, the drop-out method was used for relaxation and rectified linear unit (ReLU) for activation. Table 4 shows mean absolute error (MAE) for various depth of NN layers.

Table 4

| Features | 2-Layers | | 3-Layers | |
| --- | --- | --- | --- | --- |
| | Tr | Val | Tr | Val |
| $m, n$ | 4.17 | 4.22 | 3.91 | 4.02 |
| $m, n, RV_{telay}(b=1.0)$ | 1.49 | 1.88 | 1.27 | 1.42 |

(continued)

| | 2-Layers | | 3-Layers | |
|---|---|---|---|---|
| **Features** | Tr | Val | Tr | Val |
| $m,n, RV_{delay}(b{=}0.5)$ | 1.63 | 1.71 | 1.24 | 1.31 |
| $m,n, RV_{delay}(b{=}0.5) \, t_f(b{=}5.0)$ | 0.99 | 1.17 | 0.94 | 1.12 |
| All Features | 0.42 | 0.68 | 0.45 | 0.66 |

Comparing the MAE with the statistics in Table 3, it can be clearly seen that using just the number of vehicles and requests did not train the NN enough, as explained above. The error was almost on the same scale as the standard deviation of the objective costs. Therefore, it is clearly observed from the table that using the suggested features improved the MAE significantly.

Furthermore reducing the bin size for individual PFD as well as combining different features together also reduced MAE. After many experiments, it was decided to use three hidden layers and all the features, with appropriate bin sizes, for further experimentation.

For the final evaluation of the trained NN, the problem instances from the testing group mentioned above were used. These instances were never seen by the NN during training. Similar to the training phase, first, the MAE between the actual objective cost and the prediction was measured, using the data obtained during the test phase. The MAE was found to be 0.93, which indicated that the NN was able to predict the objective costs even for unseen instances.

Secondly, the ability of the trained NN was tested to predict the best average objective cost. For this purpose, the solution quality was measured against the best average cost that was found during test phase for each instance.

Since the NN was not trained for all the possible combinations of parameter values, a prediction was made for only a limited number of combinations. Three variants were for the choice of parameter values:

(i) 1. $U_{All}$: Use all the unique value combinations used during training
(ii) 2. $U_{Req}$: Use only those unique combinations that were used for problems with same number of requests
(iii) 3. $U_{Req,Veh,Fq}$ : Use only those unique combinations that were used for problems with same number of requests, vehicles and frequency

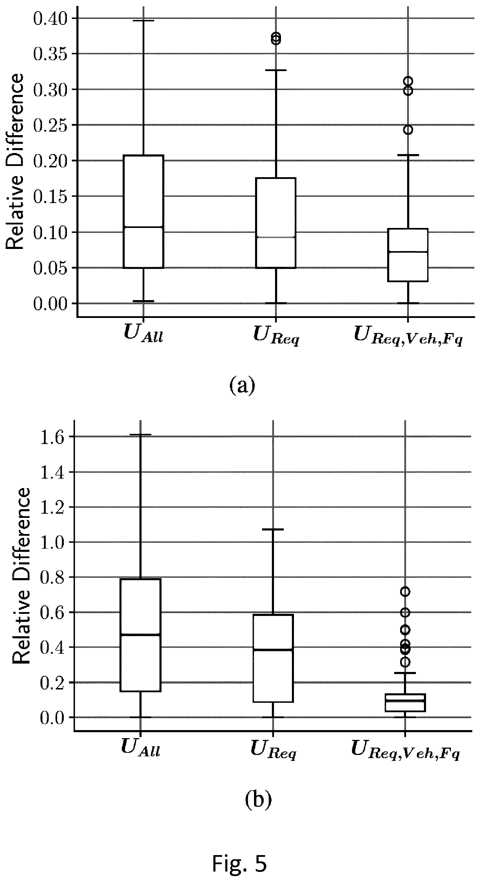

Figures 5 (a) and 5 (b) show comparisons of the prediction accuracy for three strategies in accordance with embodiments of the present invention.

As shown in Figure 5 (a), the third strategy predicted objective costs which were very close to the best average cost. The reason is that the NN had only seen examples of similar nature with specific set of parameter values. Expecting it to predict cost for the parameter values that it did not see during training leads to high degree of error. Furthermore, as shown in Figure 5 (b), the third scheme also had the least relative difference with the cost from actual LNS. This shows that the trained NN is not only predicting the cost with high accuracy, but also returning the actual parameters which should be used with LNS for achieving it.

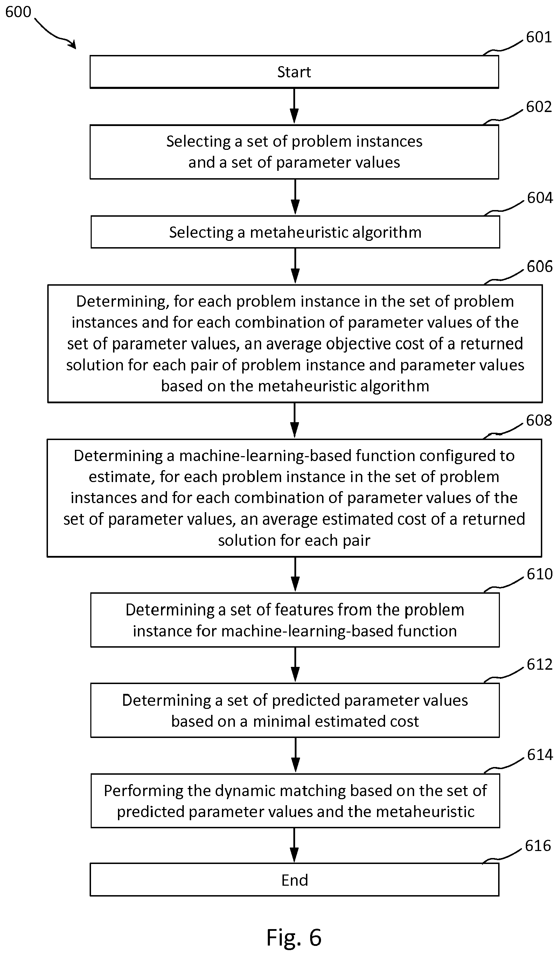

Figure 6 shows a flow chart of a method 600 for dynamic matching in accordance with embodiments of the present invention. The method 600 starts at step 601.

In step 602, a set of problem instances $\mathscr{I}$ and a set of parameter values $\wp$ are selected. In step 604, a metaheuristic algorithm

$$M: \mathscr{I} \times \mathscr{P} \mapsto \mathscr{F}$$

is selected. In step 606, for each problem instance I in the set of problem instances $\mathscr{I}$ and for each combination of parameter values Q in the set of parameter values $\wp$, an average objective cost of a returned solution for each pair I, Q of problem instance I and parameter values Q, is determined based on the metaheuristic algorithm. In step 608, a machine-learning-based function configured to estimate, for each problem instance I in the set of problem instances and for each combination of parameter values Q of the set of parameter values, an average estimated cost of a returned solution is determined for each pair I, Q. In step 610, a set of features from the problem instance J for the machine-learning-based function is determined. In step 612, a set of predicted parameter values is determined based on a minimal estimated cost. And in step 614, the dynamic matching is performed based on the set of predicted parameter values and the metaheuristic. The method 600 ends at step 616.

The matching problem in the context of RH is becoming critical over time. With introduction of so many companies providing RH services, it has become even more crucial to find optimal solutions for matching problem in less computation time. Metaheuristics can be used for this purpose but are affected by the choice of parameters used in finding solution. Therefore, the present disclosure provides a novel neural-network-based approach for finding a good set of parameters without tuning the metaheuristic repeatedly for different scenarios.

**Claims**

1. Method (600) for dynamic matching in a problem instance (J) to be solved, the method comprising:

   selecting (602) a set of problem instances ($\mathscr{I}$) and a set of parameter values ($\wp$);
   selecting (604) a metaheuristic algorithm

$$(M: \mathscr{I} \times \mathscr{P} \mapsto \mathscr{F});$$

   determining (606), for each problem instance (I) in the set of problem instances ($\mathscr{I}$) and for each combination of parameter values (Q) of the set of parameter values ($\wp$), an average objective cost of a returned solution for each pair (I, Q) of problem instance (I) and parameter values (Q), based on the metaheuristic algorithm (M);
   determining (608) a machine-learning-based function configured to estimate, for each problem instance (I) in the set of problem instances and for each combination of parameter values (Q) of the set of parameter values, an average estimated cost of a returned solution for each pair (I, Q);
   determining (610) a set of features from the problem instance (J) for the machine-learning-based function;
   determining (612) a set of predicted parameter values based on a minimal estimated cost; and
   performing (614) the dynamic matching based on the set of predicted parameter values and the metaheuristic.

2. Method (600) of the preceding claim 1, wherein determining (606) the average objective cost of the returned solution for each pair (I, Q) includes running the metaheuristic algorithm multiple times for each combination of parameter values (Q) of the set of parameter values.

3. Method (600) of any one of the preceding claims 1 or 2, wherein determining (608) the machine-learning-based function includes:

   extracting problem specific features (a) from the respective problem instance (I);
   extracting parameter specific features ($\hat{B}$) from the respective parameter values (Q); and
   providing the problem specific features (a) and the parameter specific features (B) to the machine-learning-based function, preferably in form of a feature vector (X).

4. Method (600) of any one of the preceding claims 1 to 3, wherein the machine-learning-based function includes a Neural Network, including, but not limited to, one or more of: Feed Forward Neural Networks, Recurrent Neural Networks (RNN), Long Short Term Memory Networks (LSTM), and Pointer Networks.

5. Method (600) of any one of the preceding claims 1 to 4, wherein determining (608) the machine-learning-based function includes:

   determining an error between a respective average estimated cost and a respective average objective cost of a returned solution for each pair (I, Q); and
   minimizing the error.

6. Method (600) of any one of the preceding claims 1 to 5, wherein determining the machine-learning-based function includes:

   processing the respective average objective cost based on a function G(.) in order to obtain respective processed average objective costs (Y); and
   providing the respective processed average objective costs (Y) to the machine-learning-based function.

7. Method (600) of any one of the preceding claims 1 to 6, wherein, for each problem instance (I) of the set of problem

instances ($\mathcal{I}$), there exists a set of feasible solutions ($\mathcal{F}$) and an associated objective cost given by an objective cost function

$$(f\colon \mathcal{F} \mapsto \mathbb{R}).$$

8. Method (600) of any one of the preceding claims 1 to 7, wherein the metaheuristic algorithm

$$(M\colon \mathcal{I} \times \mathcal{P} \mapsto \mathcal{F})$$

is configured to return a feasible solution based on a respective problem instance (I) and metaheuristic parameters values (Q), optionally wherein the metaheuristic algorithm (M) is configured to return the feasible solution when executed once.

9. Method (600) of claim 3, wherein extracting the problem specific features (a) from the respective problem instance (I) includes:

generating a pair-wise shareability graph (RV); and
performing a large neighborhood search (LNS) on the pair-wise shareability graph in order to extract the problem specific features (a).

10. Method (600) of any one of the preceding claims 3 or 9, wherein extracting the parameter specific features ($\hat{B}$) from the respective parameter values (Q) includes:
generating the parameter specific features ($\hat{B}$) based on the application of binning techniques to one or more percentage frequency distributions (PFD), optionally in the form of one or more PFD-based feature vectors.

Time to calculate solution

*Call*
*Metaheuristic*

*Call*
*Metaheuristic*

$r_1$ $r_2$ $r_3$ $r_4$ $r_5$ $r_6$ $r_7$ ......

Time

$\Delta t_A$
Accumulate
Requests

$\Delta t_A$
Accumulate Requests
while metaheuristic is
busy

Proxy function to
estimate best
Metaheuristic
parameters

Proxy function to
estimate best
Metaheuristic
parameters

Fig. 1

| **Input** | **Preprocessing** |
|---|---|
| Problem Instance $I$ | Extract Problem Specific Features |
| Parameter values used in testing $\hat{Q} = \begin{bmatrix} 1 & 5 & \cdots & 6 \\ \vdots & \vdots & \vdots & \vdots \\ 4 & 7 & \cdots & 8 \end{bmatrix}$ | Extract Parameter Specific Features |
| Measured average objective costs | $G(.)$ |

$a$

$\hat{B}$

$$\begin{bmatrix} a & a & \cdots & a \\ \hat{b}_{11} & \hat{b}_{12} & \cdots & \hat{b}_{1m} \\ \hat{b}_{21} & \hat{b}_{22} & \cdots & \hat{b}_{2m} \\ \vdots & \vdots & \cdots & \vdots \\ \hat{b}_{n1} & \hat{b}_{n2} & \cdots & \hat{b}_{nm} \end{bmatrix}$$

$X$

Neural Network

$\hat{Y}$

$\Sigma$

$Y$

Loss

Fig. 2

Fig. 3

Fig. 4

(a)

(b)

Fig. 5

600

601
Start

602
Selecting a set of problem instances
and a set of parameter values

604
Selecting a metaheuristic algorithm

606
Determining, for each problem instance in the set of problem
instances and for each combination of parameter values of the
set of parameter values, an average objective cost of a returned
solution for each pair of problem instance and parameter values
based on the metaheuristic algorithm

608
Determining a machine-learning-based function configured to
estimate, for each problem instance in the set of problem
instances and for each combination of parameter values of the
set of parameter values, an average estimated cost of a returned
solution for each pair

610
Determining a set of features from the problem
instance for machine-learning-based function

612
Determining a set of predicted parameter values
based on a minimal estimated cost

614
Performing the dynamic matching based on the set of
predicted parameter values and the metaheuristic

616
End

Fig. 6

Europäisches
Patentamt

European
Patent Office

Office européen
des brevets

# EUROPEAN SEARCH REPORT

Application Number

EP 19 16 6274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/197070 A1 (DONG WEI SHAN [CN] ET AL) 12 July 2018 (2018-07-12) * paragraph [0020] - paragraph [0106]; claims 1-20; figures 1-14 * ----- | 1-10 | INV. G06Q10/00 |
| X | CN 107 844 853 A (UNIV CHONGQING) 27 March 2018 (2018-03-27) * abstract * ----- | 1-10 | |
| X | US 2016/335568 A1 (BAILEY THOMAS GLENN [US] ET AL) 17 November 2016 (2016-11-17) * paragraph [0016] - paragraph [0158]; claims 1-20; figures 1-10 * ----- | 1-10 | |

| TECHNICAL FIELDS SEARCHED (IPC) |
|---|
| G06Q C12Q G01N G16B G06N G06F |

The present search report has been drawn up for all claims

| Place of search | Date of completion of the search | Examiner |
|---|---|---|
| Munich | 29 May 2019 | Viets, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EP 3 716 162 A1**

## ANNEX TO THE EUROPEAN SEARCH REPORT
## ON EUROPEAN PATENT APPLICATION NO.

EP 19 16 6274

29-05-2019

| Patent document cited in search report | Publication date | Patent family member(s) | Publication date |
|---|---|---|---|
| US 2018197070 A1 | 12-07-2018 | US 2018197070 A1<br>US 2018197071 A1 | 12-07-2018<br>12-07-2018 |
| CN 107844853 A | 27-03-2018 | NONE | |
| US 2016335568 A1 | 17-11-2016 | AU 2016265691 A1<br>CA 2985643 A1<br>CN 107851024 A<br>EP 3295301 A1<br>US 2016335568 A1<br>WO 2016187043 A1 | 21-12-2017<br>24-11-2016<br>27-03-2018<br>21-03-2018<br>17-11-2016<br>24-11-2016 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ALONSO-MORA, J. ; S. SAMARANAYAKE ; A. WALLAR ; E. FRAZZOLI ; D. RUS.** On-demand high capacity ride-sharing via dynamic trip-vehicle assignment. *Proceedings of the National Academy of Sciences,* 2017, vol. 114 (3), 462-467
- *Nature,* 2018, vol. 557 (7706), 534
- **HO, S. C. ; W. SZETO ; Y.-H. KUO ; J. M. LEUNG ; M. PETERING ; T.W. TOU.** A survey of dial a-ride problems: Literature review and recent developments (Transportation Research Part B. *Methodological,* 2018
- **ROPKE, S. ; D. PISINGER.** An adaptive large neighborhood search heuristic for the pickup and delivery problem with time windows. *Transportation science,* 2006, vol. 40 (4), 455-472
- **GSCHWIND, T. ; M. DREXL et al.** Adaptive Large Neighborhood Search with a Constant-Time Feasibility Test for the Dial-a-Ride Problem. *Tabu Search,* 2016
- **DETTI, P. ; F. PAPALINI ; G. Z. M. DE LARA.** A multi-depot dial-a-ride problem with heterogeneous vehicles and compatibility constraints in healthcare. *Omega,* 2017, vol. 70, 1-14
- **S. N., K. F. DOERNER ; R. F. HARTL.** Variable neighborhood search for the dial-a-ride problem. *Computers & Operations Research,* 2010, vol. 37 (6), 1129-1138
- **TOTH, P. ; D. VIGO.** Vehicle routing: problems, methods, and applications. *SIAM,* 2014
- **FURTHER, AGATZ, N. ; A. ERERA ; M. SAVELSBERGH ; X. WANG.** Optimization for dynamic ride-sharing: A review. *European Journal of Operational Research,* 2012, vol. 223 (2), 295-303
- **ATLANTA. HONG, L.** An improved LNS algorithm for real-time vehicle routing problem with time windows. *Computers & Operations Research,* 2012, vol. 39 (2), 151-163
- **SANTI, P. ; G. RESTA ; M. SZELL ; S. SOBOLEVSKY ; S. H. STROGATZ ; C. RATTI.** Quantifying the benefits of vehicle pooling with shareability networks. *Proceedings of the National Academy of Sciences,* 2014, vol. 111 (37), 13290-13294
- **TALBI, E.-G.** Metaheuristics: from design to implementation. John Wiley & Sons, 2009, vol. 74, 42